# DEMANDE DE BREVET EUROPEEN

(11) **EP 4 564 235 A1**
(43) Date de publication de la demande: **04.06.2025**
(21) Numéro de dépôt: 24214895.5
(22) Date de dépôt: 22.11.2024
(51) Int. Cl.: G06N 5/045, G06N 5/048, C02F 1/00, C02F 3/00

(54) **INTERFACE ET PROCEDE CONVERSATIONNEL AVEC UN SYSTEME A BASE DE CONNAISSANCES DU TYPE SYSTEME EXPERT**

(30) Priorité: 28.11.2023 FR 2313207
(71) Demandeur: Commissariat à l'Energie Atomique et aux Energies Alternatives, 75015 Paris (FR)
(72) Inventeur: POLI, Jean-Philippe, 75020 Paris (FR); FRIEDMANN, Edwin, 91191 Gif-sur-Yvette cedex (FR)
(74) Mandataire: Brevalex

(57) **Abrégé**

L'invention porte sur dispositif mis en oeuvre par ordinateur comportant une interface conversationnelle et un système à base de connaissances, le système à base de connaissances comportant des bases (7) de règles de logique floue et l'interface conversationnelle comportant :
-un module d'extraction (11) configuré pour extraire à partir d'une question relative à une recherche d'une décision, des entrées de recherche décisionnelles correspondantes qui sont adaptées pour être utilisées par ledit système à base de connaissances (5) afin de générer une décision auxdites entrées décisionnelles,
-un module d'introspection (13) configuré au cas où lesdites entrées de recherche décisionnelles sont insuffisantes, de déterminer des entrées de recherche décisionnelles supplémentaires qui manquent au système à base de connaissances pour générer la décision, le module d'introspection (13) étant configuré pour déterminer lesdites entrées de recherche décisionnelles supplémentaires en recherchant parmi toutes les règles de logique floue celles qui n'ont pas pu se déclencher et la raison de ce non-déclenchement, et
-un module de reconstitution (15) configuré pour reconstituer lesdites entrées de recherche décisionnelles supplémentaires issues du module d'introspection (13) ou la décision issue du système à base de connaissances (5) en un texte en langage naturel.

## Description

### DOMAINE TECHNIQUE

La présente invention concerne le domaine des systèmes experts et plus particulièrement leurs interfaces avec les utilisateurs.

### ÉTAT DE LA TECHNIQUE ANTÉRIEURE

Un système expert est un logiciel capable de répondre à des questions, en effectuant un raisonnement à partir de faits et de règles logiques. Le système expert comporte des bases de connaissances et de règles logiques ainsi qu'un moteur d'inférence. Ce dernier utilise les faits et les règles pour répondre à une question experte posée par un utilisateur ou pour contrôler un équipement de manière automatique ou semi-automatique, avec, par exemple, une validation par un humain. Il est davantage question de contrôle que d'aide à la décision, ce qui implique un réglage automatique des paramètres de l'équipement concerné, comme le débit d'une pompe ou la vitesse d'un moteur, par exemple.

En général, le système expert est doté d'une interface d'interrogation reposant sur une saisie des entrées puis la génération d'une réponse basée sur des modèles de phrases à trous. Ces trous sont comblés par des éléments issus d'un calcul réalisé par le système expert. En outre, certains systèmes experts implémentent des algorithmes pour trouver la règle à exécuter. D'autres systèmes experts permettent de choisir la prochaine interaction avec l'utilisateur.

Toutefois, tous ces systèmes experts ne permettent pas d'avoir un vrai dialogue avec un utilisateur et en particulier, ne permettent pas de fournir des explications. En outre, ces systèmes ne permettent pas d'enrichir les bases de règles ni d'avoir un choix de sélection de l'interaction avec l'utilisateur.
Ainsi, l'objet de la présente invention est de remédier aux inconvénients précités en proposant un dispositif comportant une interface conversationnelle et un système à base de connaissances, tel qu'un système expert, système de planification, ou un solveur de contraintes). Ce dispositif offre la possibilité de contrôler un équipement de manière automatique ou semi-automatique. De plus, il permet à un opérateur humain d'interagir en langage naturel par le biais de l'interface conversationnelle avec le système à base de connaissances facilitant ainsi des échanges précis et la fourniture d'explications claires.

### EXPOSÉ DE L'INVENTION

L'invention a pour objet un dispositif mis en oeuvre par ordinateur comportant une interface conversationnelle et un système à base de connaissances comportant des bases de règles de logique floue, comportant :
- un module d'extraction configuré pour extraire à partir d'une question ou d'une description relative à une prise de décision, des entrées de recherche décisionnelles correspondantes qui sont adaptées pour être utilisées par ledit système à base de connaissances afin de générer une décision auxdites entrées décisionnelles,
- un module d'introspection configuré au cas où lesdites entrées de recherche décisionnelles sont insuffisantes, de déterminer des entrées de recherche décisionnelles supplémentaires qui manquent au système à base de connaissances pour générer la décision, le module d'introspection étant configuré pour déterminer lesdites entrées de recherche décisionnelles supplémentaires en recherchant parmi toutes les règles de logique floue celles qui n'ont pas pu se déclencher et la raison de ce non-déclenchement, et
- un module de reconstitution configuré pour reconstituer lesdites entrées de recherche décisionnelles supplémentaires issues du module d'introspection ou la décision issue du système à base de connaissances en un texte en langage naturel.
Ceci offre à un utilisateur la possibilité de converser avec le système à base de connaissances pour par exemple contrôler un équipement industriel. L'utilisateur peut dialoguer en langage naturel avec le système à base de connaissances qui est adapté pour générer une décision en réponse à des informations fournies par l'utilisateur tout en demandant à l'utilisateur des informations supplémentaires si les informations déjà fournies ne sont pas suffisantes pour la prise de décision.

Ceci permet de contrôler un équipement de manière automatique ou semi-automatique. L'interface textuelle offre à un utilisateur la possibilité de dialoguer en langage naturel avec le système à base de connaissances pour exercer ce contrôle. Ce dispositif est conçu pour prendre des décisions en fonction des informations fournies par l'utilisateur et solliciter des détails supplémentaires si les données initiales s'avèrent insuffisantes pour prendre une décision éclairée. Le fait que le module d'introspection s'appuie sur des règles en logique floue permet d'activer plusieurs règles en même temps plutôt qu'une règle à la fois dans un enchaînement de règles.

Avantageusement, le module d'extraction est en outre configuré pour extraire à partir d'une demande d'explication les stimuli (des entrées de demande de justification) correspondants nécessaires pour permettre audit système à base de connaissances de fournir une explication, et en ce que le module de reconstitution est configuré pour produire un texte d'explication en langage naturel à partir de l'explication générée par le système à base de connaissances.

Ceci permet à l'utilisateur de dialoguer avec le système à base de connaissances pour justifier la décision fournie.

Avantageusement, le module d'extraction est configuré en outre pour extraire à partir d'une demande d'édition de règles, les stimuli correspondants pour permettre audit système à base de connaissances de mettre à jour les bases de règles.

Avantageusement, l'édition des bases de règles comporte une suppression, une modification, ou un ajout d'au moins une règle dans les bases de règles.

Ceci permet d'approvisionner les bases de règles en les éditant de façon linguistique.

Avantageusement, le module d'extraction est initialement configuré pour extraire à partir d'informations conversationnelles fournies par l'utilisateur des entrées de contexte permettant au système de connaissances de déterminer le contexte de la conversation et de charger les règles logiques adaptées audit contexte souhaité par l'utilisateur. Ceci peut concerner la recherche d'une décision, la demande d'une explication à une décision, ou l'édition des bases de règles.

Avantageusement, le module d'extraction comporte des techniques évoluées de traitement automatique du langage naturel NLP, et en ce que le module de reconstitution comporte des techniques évoluées de génération automatique de texte NLG.

Ceci permet une meilleure interface homme-machine.

En variante, le module d'extraction comporte des techniques basiques comportant une analyse syntaxique « parser » ou des expressions régulières, et en ce que le module de reconstitution comporte des modèles de texte régénérés « templates ».

Avantageusement, l'interface conversationnelle comporte un module de conversion pour convertir un message vocal en un message de texte à destination du module d'extraction, et un module de synthèse vocale pour convertir une réponse textuelle issue du système à base de connaissances en une réponse vocale.

Avantageusement, le système à base de connaissances est un système expert, un système de planification, ou un solveur de contraintes.

L'invention vise également un système de contrôle d'un équipement, comportant un dispositif comprenant un système à base de connaissances et une interface conversationnelle. Le système de contrôle comporte en outre des capteurs pour mesurer des paramètres représentatifs du fonctionnement de l'équipement, la base de connaissances étant configurée pour contrôler le bon fonctionnement dudit équipement en fonction des mesures effectuées directement par les capteurs et/ou par l'intermédiaire d'un dialogue avec un opérateur via l'interface conversationnelle.

Selon un mode de réalisation, le système de contrôle est destiné à contrôler une station d'épuration comportant une cuve équipée de capteurs et adaptée pour contenir des liquides. La base de connaissances est configurée pour déterminer le niveau de risque de contamination de la cuve en fonction des mesures réalisées par les capteurs et/ou opérateurs relatives à des paramètres représentatifs du niveau de contamination de la cuve.

Cette solution de contrôle peut également être utilisée pour ajuster la vitesse des ventilateurs d'un entrepôt afin de contrôler la qualité de l'air à l'intérieur. De plus, cette invention peut être appliquée à des procédés, par exemple dans le domaine des matériaux, où les paramètres peuvent être ajustés en fonction des performances ou des caractéristiques souhaitées.

L'invention vise aussi un procédé conversationnel avec un système à base de connaissances comportant des bases de règles de logique floue, le procédé comportant les étapes suivantes :
- extraire à partir d'une question relative à une recherche d'une décision, des entrées de recherche décisionnelles correspondantes qui sont adaptées pour être utilisées par ledit système à base de connaissances afin de générer une décision auxdites entrées décisionnelles,
- déterminer au cas où lesdites entrées de recherche décisionnelles sont insuffisantes, des entrées de recherche décisionnelles supplémentaires qui manquent au système à base de connaissances pour générer la décision, lesdites entrées de recherche décisionnelles supplémentaires étant déterminées en recherchant parmi toutes les règles de logique floue celles qui n'ont pas pu se déclencher et la raison de ce non-déclenchement, et
- reconstituer lesdites entrées de recherche décisionnelles supplémentaires ou ladite décision en un texte en langage naturel.

Avantageusement, le procédé comporte :
- une phase d'initialisation pour extraire à partir d'informations conversationnelles (fournies par l'utilisateur) des entrées de contexte permettant au système à base de connaissances de déterminer le contexte de la conversation et pour charger les règles de logique floue selon ledit contexte, et
- une phase de dialogue comportant la recherche d'une décision, la demande d'une explication à une décision, ou l'édition des bases de règles.

Selon une variante, le procédé conversationnel comporte une seule phase dans laquelle le contexte est redéterminer à chaque fois.

D'autres avantages et caractéristiques de l'invention apparaîtront dans la description détaillée non limitative ci-dessous.

### BRÈVE DESCRIPTION DES DESSINS

On décrira à présent, à titre d'exemples non limitatifs, des modes de réalisation de l'invention, en se référant aux dessins annexés, dans lesquels :
La Fig. 1 illustre très schématiquement un dispositif comportant une interface conversationnelle et un système à base de connaissances, selon un mode de réalisation de l'invention ;
La Fig. 2 est un schéma en bloc illustrant un procédé d'interfaçage conversationnelle avec un système à base de connaissances en relation avec la Fig. 1, selon un mode de réalisation préféré de l'invention ;
La Fig. 3 illustre très schématiquement un système de contrôle et suivi d'une station d'épuration comportant une interface conversationnelle et un système à base de connaissances, selon un mode de réalisation préféré de l'invention ; et
Les Figs. 4A-4H illustrent des courbes représentant les paramètres à surveiller dans la station d'épuration en utilisant la logique floue, selon un mode de réalisation préféré de l'invention.

### EXPOSÉ DÉTAILLÉ DE L'INVENTION

Le principe de l'invention est de fournir une interface textuelle permettant de dialoguer avec un système à base de connaissances, en particulier flou, pour obtenir des réponses, enrichir sa base de règles, ou demander des explications. Ceci permet de répondre efficacement à une question experte posée par un utilisateur De plus, il offre la possibilité de contrôler un équipement de manière automatique ou semi-automatique, avec, par exemple, une validation humaine.

On entend par système à base de connaissances selon la présente invention, tout système de type système expert, système de planification, solveur de contraintes, ou autres.

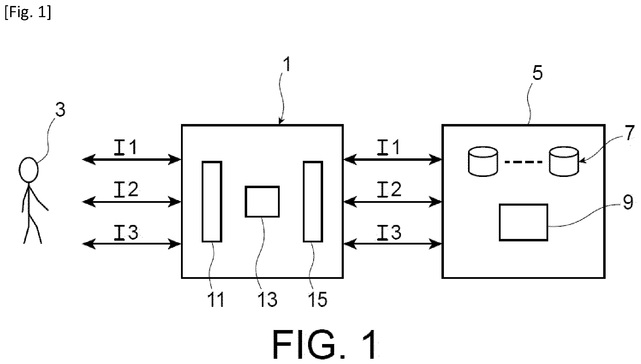

La Fig. 1 illustre très schématiquement un dispositif mis en oeuvre par ordinateur comportant une interface conversationnelle et un système à base de connaissances, selon un mode de réalisation de l'invention.

L'interface conversationnelle 1 est configurée pour mettre en relation un opérateur humain ou utilisateur 3 avec le système à base de connaissances 5. L'interface conversationnelle 1 et le système à base de connaissances 5 sont conçus pour assister dans la prise de décision, la résolution de problèmes ou le contrôle d'un équipement, qu'il soit automatique ou semi-automatique. En mode automatique, le système à base de connaissances 5 gère l'équipement ou évalue un niveau de risque en se basant sur les données collectées par les capteurs de l'équipement. En mode semi-automatique, l'interaction par l'interface conversationnelle 1 permet à l'utilisateur de collaborer avec le système à base de connaissances 5 afin d'accomplir une tâche technique sur l'équipement.

On peut distinguer trois grands types d'interaction avec le système à base de connaissances 5.

Une première interaction I1 est une consultation permettant à l'utilisateur 3 de dialoguer avec le système à base de connaissances 5 pour lui fournir des informations desquelles il extraira automatiquement les entrées qui lui sont nécessaires pour prendre une décision. C'est un dialogue, car il se peut que l'utilisateur 3 n'ait pas fourni toutes les informations nécessaires. Dans ce cas, l'interface conversationnelle 1 permet au système à base de connaissances 5 de demander à l'utilisateur les valeurs ou paramètres de contrôle manquants.

Une deuxième interaction I2 est un dialogue entre l'utilisateur 3 et le système à base de connaissances 5 afin de justifier une décision. Le système à base de connaissances 5 fournit une première justification et l'utilisateur 3 peut demander des compléments ou poser des questions plus spécifiques.

Une troisième interaction I3 est un approvisionnement en règles permettant d'éditer la base de règles 7 comprise dans le système à base de connaissances 5 de façon linguistique.

Le système à base de connaissances 5 comporte des bases de connaissances et de règles logiques 7 ainsi qu'un moteur d'inférence 9. Avantageusement, les règles logiques comportent des règles de logique floue. Le moteur d'inférence 9 est configuré pour traiter différentes formes de règles logiques en utilisant les bases de connaissances et de règles 7 afin de déduire des faits à partir des informations reçues des utilisateurs et/ou des données issues des capteurs (non représentés).

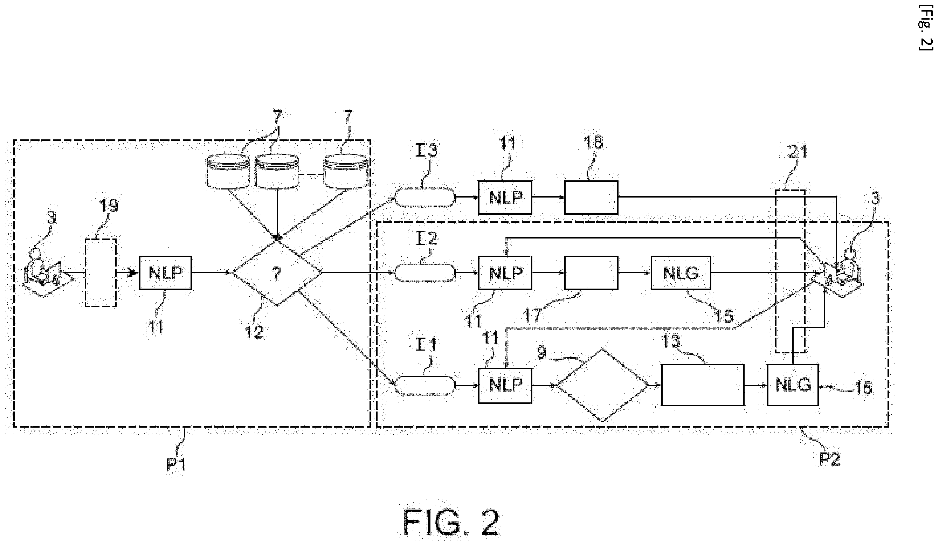

L'interface conversationnelle 1 comporte un module d'extraction 11, un module d'introspection 13, et un module de reconstitution 15. Les relations entre ces éléments est décrit en relation avec la Fig. 2

En effet, la Fig. 2 est un schéma en bloc illustrant un procédé d'interfaçage conversationnelle avec un système à base de connaissances en relation avec la Fig. 1, selon un mode de réalisation préféré de l'invention.

Dans une première phase, dite phase d'initialisation P1, l'utilisateur 3 se connecte au système à base de connaissances 5 pour commencer une conversation concernant par exemple, la prise d'une décision ou le contrôle technique d'un équipement. Dans le mode de réalisation d'un contrôle technique, l'interaction vise à obtenir des informations sur l'état de l'équipement ou à déterminer une tâche technique à effectuer sur celui-ci.

Le module d'extraction 11 est initialement configuré pour analyser les informations conversationnelles fournies par l'utilisateur 3 afin d'extraire des entrées de contexte permettant au système à base de connaissances 5 de déterminer 12 le contexte de la conversation. Le système à base de connaissances 5 détermine 12 la ou les règles à charger depuis les bases de connaissances et de règles 7 selon le contexte souhaité par l'utilisateur. Ce contexte peut concerner la recherche d'une décision, la demande d'une explication à une décision, ou l'édition des bases de règles ou de connaissances.

Une fois que les règles et/ou connaissances sont chargées, une deuxième phase, dite phase de dialogue P2 commence dans laquelle il peut y avoir un dialogue parmi trois interactions ou requêtes possibles.

La première interaction I1 est une consultation lors de laquelle une question experte est posée par l'utilisateur 3 concernant une recherche d'une décision. La question contient des entrées et leurs valeurs. Le module d'extraction 11 est configuré pour extraire à partir de la question experte posée, des entrées de recherche décisionnelles correspondantes selon une représentation formelle et les fournit au moteur de raisonnement ou d'inférence 9. Ces entrées de recherche décisionnelles sont adaptées pour être utilisées par le système à base de connaissances et plus particulièrement, par le moteur d'inférence 9 afin de générer une décision ou une réponse aux entrées de recherche décisionnelles.

Si les entrées de recherche décisionnelles sont suffisantes, alors le système à base de connaissances 5 et plus particulièrement, le moteur d'inférence 9 s'appuie sur les règles logiques et connaissances pour déduire ou générer une décision dont le contenu est représenté de manière formelle à la question de l'utilisateur 3.

Le module de reconstitution 15 est configuré ensuite pour reconstituer la représentation formelle du contenu de la décision et de son incertitude issue du moteur d'inférence 9 du système à base de connaissances 5 en une décision textuelle en langage naturel à destination de l'utilisateur.

Toutefois, au cas où les entrées de recherche décisionnelles sont insuffisantes, le module d'introspection 13 est configuré pour déterminer par introspection, (c'est-à-dire par analyse de la trace), des entrées de recherche décisionnelles supplémentaires qui manquent au moteur d'inférence 9 pour générer la décision ou la réponse.

Dans le contexte de la présente invention, l'introspection désigne la capacité du système à identifier pourquoi certaines connaissances (par exemple, des règles) n'ont pas été activées, ainsi qu'à en déterminer les causes profondes, notamment en repérant les informations manquantes qu'il faudrait demander à l'utilisateur pour poursuivre l'inférence.

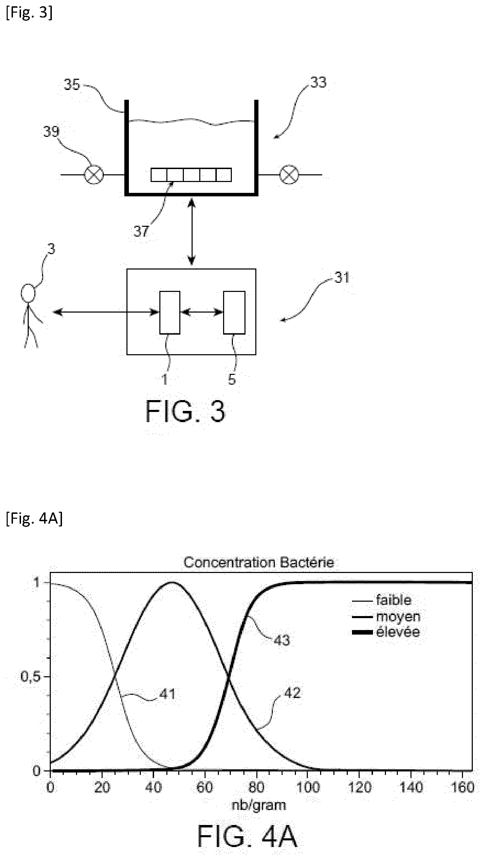

Plus particulièrement, le module d'introspection 13 est configuré pour déterminer les entrées de recherche décisionnelles supplémentaires en recherchant parmi toutes les règles de logique floue celles qui n'ont pas pu se déclencher et la raison de ce non-déclenchement. L'introspection utilise les règles logiques. Par exemple, en logique classique, si on a A ou B ou C et que A est vrai, alors les valeurs de B et de C ne sont pas utiles. En revanche, si A est faux, il faut une valeur pour B et C. De même pour la conjonction, si on a A et B et C et que A est faux, alors les valeurs de B et C ne sont pas utiles, etc. (voir la description en relation avec les Figs. 4A-4H).

Ainsi, le module d'introspection 13 permet au système à base de connaissances 5 d'indiquer de manière intelligente quelles sont les entrées qui lui manquent (càd le sous-ensemble minimal nécessaire) afin d'être en mesure de produire une décision pertinente.

Le module de reconstitution 15 est configuré ensuite pour reconstituer les entrées de recherche décisionnelles supplémentaires issues du module d'introspection 13 en une demande textuelle d'information supplémentaire en langage naturel à destination de l'utilisateur 3. Ainsi, le module de reconstitution 15 retourne une question à l'utilisateur 3 et attend sa réponse, qui doit contenir des précisions quant à la situation.

Avantageusement, le moteur d'inférence 9 compris dans le système à base de connaissances 5 est configuré pour déduire les décisions ou réponses à partir des entrées de recherche décisionnelles en utilisant des règles de logique comprenant des règles de logique floue enregistrées dans les bases de règles 7.

La logique floue étend la logique booléenne classique avec des valeurs de vérités partielles. Elle remplace la valeur de vérité d'une proposition entre vrais ou faux par un degré de vérité, à choisir par exemple dans le domaine de définition d'une fonction. En logique floue, il y a donc différents niveaux de vérité dans la satisfaction d'une condition. Ainsi, le moteur d'inférence 9 peut incarner des logiques plus ou moins strictes. Une même application pourra ainsi faire appel à des implémentations différentes judicieusement choisies selon le contexte.

La deuxième interaction I2 est la justification d'une décision. En effet, une fois que la décision est fournie, l'utilisateur 3 peut demander une explication ou une justification de cette décision. Dans ce cas, le module d'extraction 11 est configuré pour extraire à partir de la demande d'explication de l'utilisateur des entrées de demande de justification correspondantes nécessaires pour permettre au système à base de connaissances 5 de fournir une explication. Alors, un module de génération d'explication 17 compris dans le système à base de connaissances 5 est utilisé pour générer une première explication. Le module de reconstitution 15 est configuré pour transformer la première explication générée par le module de génération d'explication 17 en un texte d'explication en langage naturel à destination de l'utilisateur 3. Si l'utilisateur n'est pas convaincu, il peut demander des précisions et on se retrouve dans une boucle de dialogue. Différentes approches peuvent être utilisées pour recueillir les éléments importants de la décision.

La troisième interaction I3 est une demande d'édition de règles ou de connaissances. Dans ce cas, le module d'extraction 11 est configuré pour extraire à partir de la demande d'édition, des entrées d'édition correspondantes nécessaires pour permettre à un module de mise à jour 18 du système à base de connaissances 5 de mettre à jour les bases de règles ou de connaissances 7. La requête et l'édition des bases de règles ou de connaissances 7 peut comporter une suppression, une modification, ou un ajout d'au moins une règle dans les bases de règles et/ou une information dans les bases de connaissances. Les bases de règles et de connaissances sont mises à jour et l'utilisateur est notifié du succès ou pas de sa demande.

On notera qu'en variante, au lieu d'avoir deux phases d'initialisation et de dialogue, on peut avoir qu'une seule phase dans laquelle le contexte est redéterminer à chaque fois.

Avantageusement, le module d'extraction 11 comporte des techniques évoluées de traitement automatique du langage naturel NLP « Natural Language Processing » pour analyser le texte de l'utilisateur en utilisant des méthodes stochastiques, probabilistes ou statistiques.

En variante, le module d'extraction 11 comporte des techniques d'expressions régulières basiques ou des techniques d'analyse syntaxique « parser » basées sur un langage formel défini par un ensemble de règles de syntaxe.

Avantageusement, le module de reconstitution 15 comporte des techniques évoluées de génération automatique de texte NLG « Natural Language Génération » en transformant une représentation formelle d'un contenu en une forme textuelle à destination de l'utilisateur.

En variante, le module de reconstitution 15 comporte des modèles de texte régénérés « templates ».

Par ailleurs, l'interface conversationnelle peut comporter un module de conversion vocale 19 et un module de synthèse vocale 21. Le module de conversion 19 est configuré pour convertir un message vocal produit par l'utilisateur 3 en un message de texte à destination du module d'extraction 11. Le module de synthèse 21 est configuré pour convertir une réponse textuelle issue du système à base de connaissances 5 en une réponse vocale.

Dans un mode de réalisation, le dispositif comprenant le système à base de connaissances et l'interface conversationnelle selon l'invention, est utilisé dans un système de contrôle d'équipement. Dans ce cas, le système de contrôle ou l'équipement comporte des capteurs pour mesurer des paramètres représentatifs du fonctionnement de l'équipement. La base de connaissances est configurée pour contrôler le bon fonctionnement de l'équipement en fonction des mesures effectuées directement par les capteurs et/ou par l'intermédiaire d'un dialogue avec un opérateur via l'interface conversationnelle.

En effet, la Fig. 3 illustre très schématiquement un système de contrôle et suivi d'une station d'épuration comportant une interface conversationnelle, selon un mode de réalisation préféré de l'invention.

Cet exemple est une application de l'interface conversationnelle dans un système de contrôle 31 et suivi d'une station d'épuration 33. La station d'épuration 33 comporte une cuve 35 ou bassine remplie de liquides. Le système de contrôle 31 comporte un ensemble de capteurs 37 équipant la cuve 33, un système à base de connaissances 5, et une interface conversationnelle 1. L'interface conversationnelle 1 est configurée pour interagir avec le système à base de connaissances 5 selon la description en relation avec les Figs. 1 et 2.

L'ensemble de capteurs 37 est destiné à mesurer les valeurs de plusieurs paramètres représentatifs du niveau de contamination de la cuve 35. A titre d'exemple, cet ensemble de capteurs 37 comporte des capteurs de mesure de concentrations de carbonate de calcium, de 1,4-dioxane, de NO2, de particules, ainsi que des capteurs de mesure du débit du liquide et de l'ouverture des vannes 39 de la cuve.

Les capteurs 37 peuvent être configurés pour fournir les mesures au système à base de connaissances 5 de manière périodique, par exemple toutes les cinq minutes. En fonction des valeurs ou niveaux mesurés par les capteurs 37, le système à base de connaissances 5 est configuré pour déterminer automatiquement le niveau de risque de contamination de la cuve 35 en appliquant des règles logiques sur divers paramètres à surveiller au sein de la station d'épuration 33. De ce fait, la base de connaissances 5 est conçue pour contrôler automatiquement la station d'épuration et pour émettre des alertes si le niveau de risque de contamination de la cuve 35 dépasse un seuil prédéfini.

Toutefois, dans certains cas il est utile pour le système à base de connaissances 5 de prendre en compte d'autres paramètres ou événements qui nécessitent des analyses différées et qui peuvent être demandées à l'utilisateur 3 via l'interface conversationnelle 1. L'un de ces paramètres est la concentration en bactérie dans la cuve 35 qui permet de mieux déterminer le risque de contamination. Un autre paramètre est la turbidité (i.e. caractère trouble du liquide) de la cuve 35 ou du bassin.

Dans ce cas, une interaction ou un interfaçage conversationnelle entre l'utilisateur et le système à base de connaissances est effectué, comme illustré dans les Figures 1 et 2, afin de déterminer et fournir les paramètres nécessaires pour le contrôle et la surveillance de la station d'épuration.

On notera que certaines analyses peuvent nécessiter une durée relativement longue (par exemple plusieurs heures) et dans ce cas, on demande à les faire uniquement si elles sont nécessaires pour obtenir la décision.

Avantageusement, le risque de contamination de la cuve 35 est déterminé en appliquant des règles de logique floue sur les différents paramètres à surveiller dans la station 33 d'épuration.

La logique floue permet de caractériser chaque paramètre en autorisant différents degrés de véracité. Par exemple, la valeur d'un paramètre peut être décrite comme élevée, moyen, faible ou autre. On peut ainsi avoir des règles plus proches du langage naturel permettant par conséquent, de formuler une explication plus simple, plus nuancée et plus adaptée à l'application.

Les Figs. 4A-4H illustrent des courbes représentant les paramètres à surveiller dans la station d'épuration en utilisant la logique floue, selon un mode de réalisation préféré de l'invention.

Ces courbes représentent selon une logique floue le degré de véracité ou taux de confiance (compris entre 0 et 1) en fonction des valeurs d'un paramètre physique, chimique ou biologique.

Plus particulièrement, les trois courbes 41, 42, 43 sur la Fig. 4A représentent dans un repère cartésien trois niveaux de concentration en bactérie selon différents taux de confiance. L'abscisse représente la concentration exprimée en nombre par gramme (nb/gram) de bactéries tandis que l'ordonné représente le taux de confiance entre 0 et 1. Les première 41, deuxième 42, et troisième 43 courbes décrivent les concentrations en bactérie selon des niveaux faible, moyen, et élevé respectivement. Par exemple, pour la première courbe 41, on considère qu'une concentration en dessous de 25 nb/gram est faible avec un taux de confiance de 0.5 ou qu'une concentration en dessous de 10 nb/gram est faible avec un taux de confiance de 0.9.

A titre d'exemple, si on choisit un taux de confiance de 0.5, alors ces trois courbes impliquent qu'une concentration en dessous d'environ 25 nb/gram présente un niveau faible, qu'une concentration entre environ 25 nb/gram et 70 nb/gram présente un niveau moyen, et qu'une concentration plus grande qu'environ 70 nb/gram présente un niveau élevé.

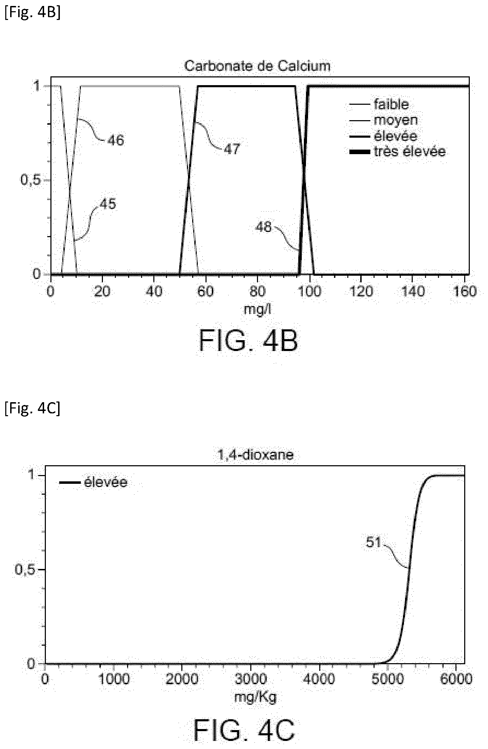

Les quatre courbes 45, 46, 47, et 48 sur la Fig. 4B représentent quatre niveaux de concentration en carbonate de calcium. L'abscisse représente la concentration exprimée en milligramme par litre (mg/l) de carbonate de calcium, et l'ordonnée représente le taux de confiance entre 0 et 1. Les première 45, deuxième 46, troisième 47, et quatrième 48 courbes décrivent les concentrations en carbonate de calcium selon des niveaux faible, moyen, élevé, et très élevé respectivement.

Par exemple, si on choisit un taux de confiance de 0.5, alors les quatre courbes indiquent qu'une concentration en dessous d'environ 10 mg/l présente un niveau faible, qu'une concentration entre environ 10 mg/l et 55 mg/l présente un niveau moyen, qu'une concentration entre environ 55 mg/l et 100 mg/l présente un niveau élevé et qu'une concentration plus grande qu'environ 100 mg/l présente un niveau élevé.

La courbe 51 sur la Fig. 4C représente le taux de confiance en fonction de la concentration exprimée en milligramme par kilogramme (mg/Kg) de 1,4-dioxane. A titre d'exemple, une concentration plus grande qu'environ 5500 mg/Kg est considérée comme élevée.

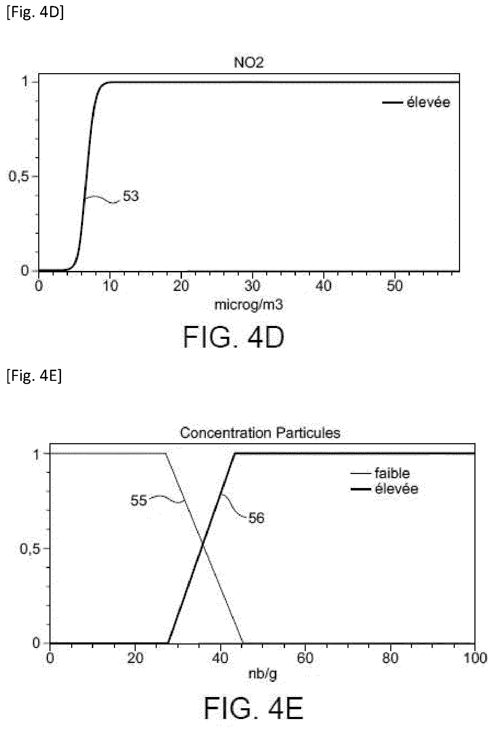

La courbe 53 sur la Fig. 4D représente le taux de confiance en fonction de la concentration exprimée en microgramme par mètre cube (microg/m3) de niveau de NO2. Selon cet exemple, une concentration plus grande qu'environ microg/m3 est considérée comme élevée.

Les deux courbes 55, 56 sur la Fig. 4E représentent respectivement des niveaux faible et élevé de concentration en particules exprimée en nombre par gramme (nb/g). Par exemple, si on choisit un taux de confiance de 0.5, alors les deux courbes 55, 56 montrent qu'une concentration en dessous d'environ 30 nb/g présente un niveau faible et qu'une concentration au-dessus d'environ 30 nb/g présente un niveau élevé.

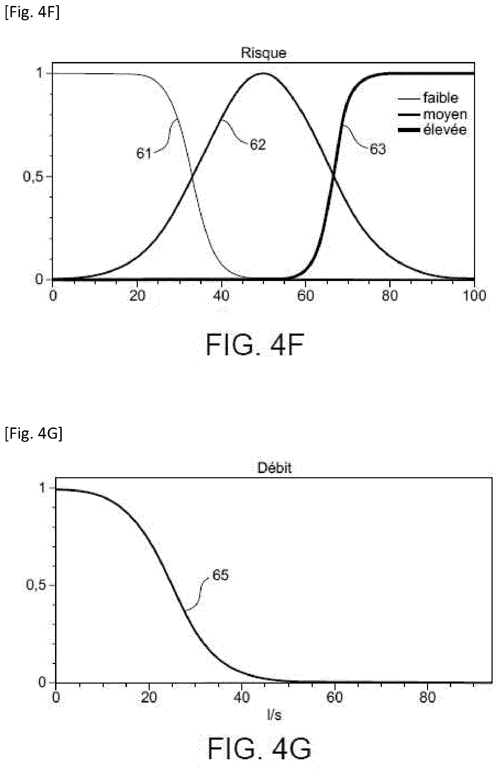

Les trois courbes 61, 62, 63 sur la Fig. 4F représentent respectivement des niveaux faible, moyen, et élevé d'un taux de risque. Par exemple, si on choisit un taux de confiance de 0.5, alors ces trois courbes 61, 62, 63 impliquent qu'un taux de risque en dessous d'environ 35% présente un niveau faible, qu'un taux de risque entre environ 35% et 65% présente un niveau moyen et qu'un taux de risque au-dessus d'environ 65% présente un niveau élevé.

La courbe 65 sur la Fig. 4G représente le taux de confiance en fonction du débit du liquide exprimé en litre par seconde (l/s). Pour un taux de confiance de 0.5, le débit est considéré comme faible en dessous de 25 l/s.

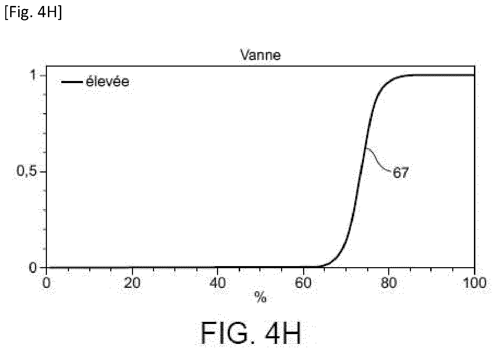

La courbe 67 sur la Fig. 4H représente le taux de confiance en fonction de l'ouverture de la vanne exprimée en pourcentage. Pour un taux de confiance de 0.5, l'ouverture de la vanne est considérée comme faible en dessous de 75%.

Toutes ces courbes peuvent être stockées dans les bases de connaissances. En outre, des règles de logique floue basées sur les données de ces courbes sont enregistrées dans les bases de règles 7 du système à base de connaissances 5.

Les règles de logique floue comporte des formules reliant des propositions par des connecteurs. Les connecteurs de conjonction (***et***), de disjonction (***ou***), et d'implication (***alors***) sont représentés dans la suite en caractères italique gras.

La sortie de chaque règle désigne le niveau (faible, moyen, élevé) du « risque » de la contamination. Par défaut, le niveau de risque est initialement égal à zéro « nul ». Les règles logiques s'activent pour déterminer le niveau courant du risque en fonction des différents paramètres.

A titre d'exemple, les bases de règles peuvent comporter de manière non-limitative, les règles suivantes :
1. ***Si*** le niveau de carbonate de calcium **est** élevé ***et*** (le niveau de NO2 **est** élevé ***et*** le niveau de 1,4-dioxane **est** élevé), ***alors*** le risque **est** élevé.
2. ***Si*** le niveau de carbonate de calcium **est** élevé ***et*** (((le niveau de NO2 **n'est pas** élevé) ***ou*** (le niveau de NO2 **est** élevé ***et*** (le niveau de 1,4-dioxane **est** élevé))) ***et*** la concentration de bactéries **est** élevée), ***alors*** le risque **est** élevé.
3. ***Si*** le niveau de carbonate de calcium **est** faible ***et*** (((le niveau de NO2 **n'est pas** élevé) ***ou*** (le niveau de NO2 **est** élevé ***et*** (le niveau de 1,4-dioxane **n'est pas** élevé))) ***et*** ((la concentration de bactéries **n'est pas** élevée) ***et*** la concentration de particules **est** élevé)), ***alors*** le risque **est** moyen.
4. ***Si*** le niveau de carbonate de calcium **est** faible ***et*** (((le niveau de NO2 **n'est pas** élevé) ***ou*** (le niveau de NO2 **est** élevé ***et*** (le niveau de 1,4-dioxane **n'est pas** élevé))) ***et*** ((la concentration de bactéries **n'est pas** élevée) ***et*** ((la concentration de particules **n'est pas** élevée) ***et*** ((le taux en amont **n'est pas** faible) ***et*** le taux en aval **est** faible)))), ***alors*** le risque **est** moyen.
5. ***Si*** le niveau de carbonate de calcium **est** faible ***et*** (((le niveau de NO2 **n'est pas** élevé) ***ou*** (le niveau de NO2 **est** élevé ***et*** (le niveau de 1,4-dioxane **n'est pas** élevé))) ***et*** ((la concentration de bactéries **n'est pas** élevée) ***et*** ((la concentration de particules **n'est pas** élevée) ***et*** ((le taux en amont ***n'est pas*** faible) ***et*** (le taux en aval **n'est pas** faible))))) ***alors*** le risque **est** faible.
6. ***Si*** le niveau de carbonate de calcium **est** faible ***et*** (((le niveau de NO2 **n'est pas** élevé) ***ou*** (le niveau de NO2 **est** élevé ***et*** (le niveau de 1,4-dioxane **n'est pas** élevé))) ***et*** ((la concentration de bactéries **n'est pas** élevée) ***et*** ((la concentration de particules **n'est pas** élevée) ***et*** (le débit en amont **est** faible ***et*** l'ouverture de la vanne **est** élevée)))), ***alors*** le risque **est** moyen.
7. ***Si*** le niveau de carbonate de calcium **est** faible ***et*** (((le niveau de NO2 **n'est pas** élevé) ***ou*** (le niveau de NO2 **est** élevé ***et*** (le niveau de 1,4-dioxane **n'est pas** élevé))) ***et*** ((la concentration de bactéries **n'est pas** élevée) ***et*** ((la concentration de particules **n'est pas élevée**) ***et*** (le débit en amont **est** faible ***et*** (l'ouverture de la vanne **n'est pas** élevée))))), alors le risque **est** moyen.

Quelques cas de figure relatifs à l'activation des règles ci-dessus peuvent être résumés de la manière suivante :
a) Aucune règle n'est activée, dans ce cas, le risque est à sa valeur par défaut : Nul.
b) La règle 1 est activée, c'est-à-dire que les niveaux de carbonate de calcium, dioxyde d'azote et de 1,4-dioxane sont élevés. La réponse calculée par le système à base de connaissances 5 à partir des sorties des capteurs 37 peut donc être directement envoyée en l'état à l'opérateur 3 via l'interface conversationnelle 1. Le risque est ici élevé.
c) Le niveau de carbonate de calcium est élevé mais pas celui de dioxyde d'azote. La règle 2 pourrait s'activer, mais il manque l'information de la concentration en bactérie. De même pour les autres règles. Un message est donc envoyé via l'interface conversationnelle 1 à l'opérateur 3 et le système à base de connaissances 5 se met en attente de sa réponse concernant la concentration en bactéries. Par exemple, une heure après, l'opérateur 3 saisit les résultats de l'analyse et l'inférence peut se poursuivre. Si la concentration en bactérie est élevée, la règle 2 s'active et l'interface conversationnelle 1 indique à l'opérateur que le risque est élevé.
d) L'opérateur demande pourquoi le risque est élevé. Par introspection, l'interface conversationnelle 1 sélectionne la seule règle activée, qui est la deuxième et transmet les informations suivantes, vérifiées dans la prémisse : « parce que le niveau de carbonate de calcium est élevé et le niveau de NO2 n'est pas élevé et la concentration de bactéries est élevée ».
Ainsi, les exemples ci-dessus, illustrent le lien entre les entrées (données provenant des capteurs et/ou de l'utilisateur représentant les paramètres à surveiller) et la sortie, à savoir le niveau de risque de contamination. Ce dernier est déterminé en appliquant des règles logiques sur les différents paramètres.

Le système de contrôle selon l'invention peut également être utilisé dans de nombreux autres domaines. Par exemple, il peut servir à ajuster la vitesse des ventilateurs d'un entrepôt pour réguler la qualité de l'air à l'intérieur. Dans un autre cas, le système peut être appliqué à des process dans le domaine des sciences des matériaux, permettant d'ajuster les paramètres en fonction des performances ou des caractéristiques souhaitées.

Bien entendu, diverses modifications peuvent être apportées par l'homme du métier à l'invention qui vient d'être décrite, uniquement à titre d'exemples non limitatifs.

## Revendications

1. Dispositif mis en oeuvre par ordinateur comportant une interface conversationnelle et un système à base de connaissances, **caractérisée en ce que** le système à base de connaissances comporte des bases (7) de règles de logique floue et **en ce que** l'interface conversationnelle comporte :
- un module d'extraction (11) configuré pour extraire à partir d'une question relative à une recherche d'une décision, des entrées de recherche décisionnelles correspondantes qui sont adaptées pour être utilisées par ledit système à base de connaissances (5) afin de générer une décision auxdites entrées décisionnelles,
- un module d'introspection (13) configuré au cas où lesdites entrées de recherche décisionnelles sont insuffisantes, de déterminer des entrées de recherche décisionnelles supplémentaires qui manquent au système à base de connaissances pour générer la décision, le module d'introspection (13) étant configuré pour déterminer lesdites entrées de recherche décisionnelles supplémentaires en recherchant parmi toutes les règles de logique floue celles qui n'ont pas pu se déclencher et la raison de ce non-déclenchement, et
- un module de reconstitution (15) configuré pour reconstituer lesdites entrées de recherche décisionnelles supplémentaires issues du module d'introspection (13) ou la décision issue du système à base de connaissances (5) en un texte en langage naturel.

2. Dispositif selon la revendication 1, **caractérisée en ce que** le module d'extraction (11) est en outre configuré pour extraire à partir d'une demande d'explication des entrées de demande de justification correspondantes nécessaires pour permettre audit système à base de connaissances (5) de fournir une explication, et **en ce que** le module de reconstitution (15) est configuré pour produire un texte d'explication en langage naturel à partir de l'explication générée par le système à base de connaissances.

3. Dispositif selon l'une quelconque des revendications précédentes, **caractérisée en ce que** le module d'extraction (11) est configuré en outre pour extraire à partir d'une demande d'édition de règles, des entrées d'édition correspondantes pour permettre audit système à base de connaissances (5) de mettre à jour les bases de règles.

4. Dispositif selon la revendication 3, **caractérisée en ce que** l'édition des bases (7) de règles comporte une suppression, une modification, ou un ajout d'au moins une règle dans les bases de règles.

5. Dispositif selon l'une quelconque des revendications précédentes, **caractérisée en ce que** le module d'extraction (11) est initialement configuré pour extraire à partir d'informations conversationnelles des entrées de contexte permettant au système à base de connaissances de déterminer le contexte de la conversation et de charger les règles logiques adaptées audit contexte.

6. Dispositif selon l'une quelconque des revendications précédentes, **caractérisée en ce que** le module d'extraction (11) comporte des techniques évoluées de traitement automatique du langage naturel NLP, et **en ce que** le module de reconstitution (15) comporte des techniques évoluées de génération automatique de texte NLG.

7. Dispositif selon l'une quelconque des revendications 1 à 5, **caractérisée en ce que** le module d'extraction (11) comporte des techniques basiques comportant une analyse syntaxique ou des expressions régulières, et **en ce que** le module de reconstitution (15) comporte des modèles de texte régénérés.

8. Dispositif selon l'une quelconque des revendications précédentes, **caractérisée en ce qu'**il comporte un module de conversion (19) pour convertir un message vocal en un message de texte à destination du module d'extraction (11), et un module de synthèse (21) pour convertir une réponse textuelle issue du système à base de connaissances (5) en une réponse vocale.

9. Dispositif selon l'une quelconque des revendications précédentes, **caractérisée en ce que** le système à base de connaissances (5) est un système expert, un système de planification, ou un solveur de contraintes.

10. Système de contrôle d'un équipement, comportant un dispositif comprenant un système à base de connaissances (5) et une interface conversationnelle (1) selon l'une quelconque des revendications précédentes, **caractérisé en ce qu'**il comporte en outre des capteurs pour mesurer des paramètres représentatifs du fonctionnement de l'équipement, la base de connaissances (5) étant configurée pour contrôler le bon fonctionnement dudit équipement en fonction des mesures effectuées directement par les capteurs et/ou par l'intermédiaire d'un dialogue avec un opérateur via l'interface conversationnelle.

11. Système de contrôle (31) selon la revendication 10, **caractérisé en ce qu'**il est destiné à contrôler une station d'épuration (33) comportant une cuve (35) équipée de capteurs (37) et adaptée pour contenir des liquides, la base de connaissances (5) étant configurée pour déterminer le niveau de risque de contamination de la cuve (35) en fonction des mesures réalisées par les capteurs (37) et/ou opérateurs (3) relatives à des paramètres représentatifs du niveau de contamination de la cuve (35).

12. Procédé conversationnel mis en oeuvre par ordinateur avec un système à base de connaissances comportant des bases (7) de règles de logique floue, **caractérisé en ce qu'**il comporte les étapes suivantes :
- extraire à partir d'une question relative à une recherche d'une décision, des entrées de recherche décisionnelles correspondantes qui sont adaptées pour être utilisées par ledit système à base de connaissances (5) afin de générer une décision auxdites entrées décisionnelles,
- déterminer au cas où lesdites entrées de recherche décisionnelles sont insuffisantes, des entrées de recherche décisionnelles supplémentaires qui manquent au système à base de connaissances pour générer la décision, lesdites entrées de recherche décisionnelles supplémentaires étant déterminées en recherchant parmi toutes les règles de logique floue celles qui n'ont pas pu se déclencher et la raison de ce non-déclenchement, et
- reconstituer lesdites entrées de recherche décisionnelles supplémentaires ou ladite décision en un texte en langage naturel.

13. Procédé conversationnel selon la revendication 12, **caractérisée en ce qu'**il comporte :
- une phase d'initialisation (P1) pour extraire à partir d'informations conversationnelles des entrées de contexte permettant au système à base de connaissances de déterminer le contexte de la conversation et pour charger les règles de logique floue selon ledit contexte, et
- une phase de dialogue (P2) comportant la cherche d'une décision, la demande d'une explication à une décision, ou l'édition des bases de règles.

14. Procédé conversationnel selon la revendication 12, **caractérisée en ce qu'**il comporte une seule phase dans laquelle le contexte est redéterminé à chaque fois.
